# EUROPÄISCHE PATENTSCHRIFT

(11) **EP 4 151 389 B1**
(45) Veröffentlichungstag und Bekanntmachung des Hinweises auf die Patenterteilung: **11.03.2026**
(21) Anmeldenummer: 22195588.3
(22) Anmeldetag: 14.09.2022
(51) Int. Cl.: B29C 51/02, B29C 51/14, B29C 44/50, A47G 19/00, B29C 44/56, B32B 5/18, B32B 27/06, B32B 27/08, B32B 27/32, B65D 1/34, B29C 48/00, B29K 105/04, B29K 23/00, B29L 31/00, B29C 51/00, B65D 1/02

(54) **MEHRWEGGESCHIRR AUS KUNSTSTOFF SOWIE VERFAHREN ZUR HERSTELLUNG DESSELBEN**
REUSABLE PLASTIC DISHWARE AND METHOD FOR THE PRODUCTION THEREOF
VAISSELLE RÉUTILISABLE EN MATIÈRE PLASTIQUE ET PROCÉDÉ POUR SA FABRICATION

(30) Priorität: 16.09.2021 DE 102021124020
(43) Veröffentlichungstag der Anmeldung: 22.03.2023
(73) Patentinhaber: IP Verpackungen GmbH, 52457 Aldenhoven (DE)
(72) Erfinder: FÉRON, Frank, 52457 Aldenhoven (DE)
(74) Vertreter: Hauck Patent- und Rechtsanwälte PartmbB

(56) Entgegenhaltungen:
- EP-A1- 3 838 971
- EP-B1- 1 144 186
- EP-B1- 2 160 290
- EP-B1- 2 258 545
- DE-A1- 10 158 253
- DE-U1- 20 304 809
- US-A1- 2003 186 039
- US-A1- 2016 082 692

## Beschreibung

Die Erfindung betrifft ein Mehrweggeschirr aus Kunststoff sowie ein Verfahren zum Herstellen eines solchen Mehrweggeschirrs.

Geschirrartikel aus Kunststoff sind grundsätzlich bekannt, beispielsweise Klappboxen, Schalen oder Teller aus Polystyrol. Derartige Geschirrartikel sind jedoch lediglich zur einmaligen Verwendung geeignet. So ist Polystyrol relativ brüchig und wenig temperaturbeständig, was eine Reinigung beispielsweise in einer Geschirrspülmaschine und damit eine Wiederverwendbarkeit unmöglich macht.

Aus DE 44 06 039 C1 ist eine Mehrwegverpackung aus einem Partikelschaum bekannt. Zur Herstellung desselben wird ein Trägermaterial aus einem thermoplastischen oder thermisch verformbaren Polymerfilm bereitgestellt und mit einer Haftschicht versehen. Anschließend werden Schäumpartikel aus Polymermaterial auf das Trägermaterial aufgebracht, wobei eine Verbindung zwischen Trägermaterial und Partikelschaum durch die Haftschicht erfolgt. Der so erhaltene Verbund aus Trägermaterial und Partikelbeschichtung wird dann wiederum in eine Schäumvorrichtung eingelegt und ein Hohlraum des Formkörpers mit Partikeln ausgeschäumt. Als Partikelschaum wird expandiertes Polystyrol, EPS, vorgeschlagen. So soll eine recycelbare Mehrwegverpackung erzeugt werden.

Die EP 3 838 971 A1 beschreibt die Herstellung eines Kunststoffbehälters aus einer dreilagigen Platte, die eine geschäumte Kernlage aus einer Polypropylen-Zusammensetzung und zwei nicht geschäumte Lagen aus einer Polypropylen und Polyethylen enthaltenden Zusammensetzung auf beiden Seiten umfasst. Die mehrlagige Platte wird durch Koextrusion der geschäumten Lage gemeinsam mit den beiden nicht geschäumten äußeren Lagen gebildet. Der Artikel wird aus der Platte thermogeformt.

Die US 2016/0082692 A1 beschreibt die Herstellung einer mehrlagigen Platte, bei der nicht expandiertes Material enthaltend Polypropylen auf eine erste Seite einer Lage aus expandiertem Schaummaterial enthaltend Polypropylen koextrudiert, extrusionsbeschichtet oder laminiert wird. Ein Thermoform-Prozess zum Bilden eines Behälters aus dem Plattenmaterial umfasst das Erzeugen eines Zuschnittes für ein Bodenelement und eines Zuschnittes für eine Hülse, das Biegen der Hülse und das Herstellen einer Hülsennaht und einer Bodennaht zum Verbinden der Hülse mit dem Boden.

Die US 2003/0186039 A1 beschreibt eine mehrlagige Platte, die eine Lage aus geschäumtem Polypropylen und eine nicht geschäumte Lage aus einem Füllstoff umfasst. Als Herstellungsverfahren sind Extrusionslaminieren, Sandwich-Laminieren und eine Methode angegeben, bei der mindestens eine Oberfläche einer Platte aus einem thermoplastischen Kunststoff und einer geschäumten Platte erhitzt und diese aufeinanderlaminiert werden. Aus der Platte wird durch Erhitzen und Vakuum- und/oder Druckformen ein Behälter gebildet.

Die DE 203 04 809 U1 beschreibt thermogeformte Werkstoffverbunde, die aus einer unvernetzten Polypropylen-Schaumfolie mit einer Deckschicht aus einem Gewebe, Filz, Velours oder Vlies bestehen und als Innenauskleidungsteile im Fuß- oder Kofferraum von Kraftfahrzeugen eingesetzt werden. Die Deckschichten werden vor und/oder während des Verbindens mit der Schaumfolie in einem Thermoform- oder Tiefzieh-Prozess umgeformt.

Die DE 101 58 253 A1 beschreibt die Herstellung eines geschäumten Polypropylenharz-Behälters zum Erhitzen in der Mikrowelle und das Herstellen einer laminierten Platte durch Laminieren mindestens einer Seite einer geschäumten Polypropylenharzschicht mit einer nicht-geschäumten Schicht, die ein Polypropylenharz umfasst, und das Erwärmen und Formen der laminierten Platte. Das Formverfahren zum Bilden des geschäumten Polypropylenharz-Behälters umfasst das Erweichen der Platte durch Erwärmen und Formen durch ein Vakuum- und/oder Druckformverfahren.

Die EP 1 144 186 B1 beschreibt ein Verfahren zum Herstellen eines dimensionsstabilen Verpackungsbehälters aus einer mehrlagigen Struktur mit Gasbarriere-Eigenschaften. Der Verpackungsbehälter ist ein gefalteter Behälter oder eine Flasche oder ein ähnlicher extrusionsblasgeformter Behälter.

Die EP 2 160 290 B1 beschreibt einen mehrschichtigen geschäumten Polymerartikel, der eine nicht-laminierte mehrschichtige thermoplastische Materialplatte umfasst. Diese weist erste und zweite diskrete äußere Schichten auf, zwischen denen eine Mehrzahl von diskreten inneren geschäumten Schichten angeordnet ist, wobei die genannten Schichten integral zueinander ausgebildet sind. Der mehrlagige geschäumte Polymerartikel, insbesondere eine Tasse oder ein Tray, ist aus einer soliden monolithischen thermoplastischen Materialplatte hergestellt. Das Herstellungsverfahren umfasst die Absorption einer wirksamen Menge plastifizierenden Gases in die thermoplastische Platte, ein Desorbieren des Gases und ein Erhitzen der thermoplastischen Platte, um eine geschäumte thermoplastische Materialplatte herzustellen, aus der durch Thermoformen mehrlagige geschäumte Polymerartikel hergestellt werden.

Die EP 2 258 545 B1 beschreibt eine leicht zu öffnende, nicht-thermogeformte Gesamtverpackung aus einer Mehrschichtfolie. Diese umfasst eine monoaxial gereckte, siegelfähige Schicht basierend auf einem geschäumten thermoplastischen Olefin-Polymer und eine monoaxial in Längsrichtung gereckte Trägerschicht basierend auf wenigstens einem thermoplastischen Polymer und gegebenenfalls eine Barriereschicht. Die Mehrschichtfolie kann als Schlauchfolie oder als Cast-Folie produziert und verarbeitet werden. Eine aus der Mehrschichtfolie hergestellte Verpackung kann ein Beutel oder eine Einschlagverpackung sein.

Ausgehend von dem erläuterten Stand der Technik liegt der Erfindung die Aufgabe zugrunde, ein Mehrweggeschirr bereitzustellen, das auch bei mehrfacher Wiederverwendung besonders beständig ist.

Die Aufgabe wird gelöst durch ein Mehrweggeschirr gemäß Anspruch 1. Vorteilhafte Ausgestaltungen sind Gegenstand der abhängigen Ansprüche, der Beschreibung sowie der Figuren.

Das erfindungsgemäße Verfahren zum Herstellen von Mehrweggeschirr umfasst die folgenden Schritte:
- Extrudieren einer fortlaufenden Bahn aus Polypropylen-Kunststoffschaum unter Ausbildung einer geschlossenen Oberfläche des Kunststoffschaums mittels eines Schaumextruders,
- anschließendes Auflaminieren in flüssigem Zustand einer Polypropylen-Kunststoffschicht unmittelbar auf die Oberseite und die Unterseite der Bahn,
- Formen des Mehrweggeschirrartikels durch Tiefziehen und nachfolgendes Ausstanzen des Mehrweggeschirrartikels aus der beidseitig mit der auflaminierten Polypropylen-Kunststoffschicht versehenen Bahn.

Das erfindungsgemäße Mehrweggeschirr aus Kunststoff umfasst einen Grundkörper aus einem extrudierten Kunststoffschaum und mindestens eine, auf einer Seite des Grundkörpers auflaminierte Kunststoffschicht.

Das erfindungsgemäße Verfahren zum Herstellen des Mehrweggeschirrs umfasst die Schritte: Extrudieren einer fortlaufenden Bahn aus Kunststoffschaum mittels eines Schaumextruders, Auflaminieren einer Kunststoffschicht auf die Oberseite und/oder die Unterseite der Bahn, Tiefziehen des Mehrweggeschirrartikels aus der mit der auflaminierten Kunststoffschicht versehenen Bahn.

Der Grundkörper des erfindungsgemäßen Mehrweggeschirrs besteht also aus einem extrudierten Kunststoffschaum, insbesondere aus extrudiertem Polypropylen (XPP). Durch den Extrusionsvorgang bildet der Kunststoffschaum eine geschlossene Oberfläche aus. Das Extrudieren der fortlaufenden Bahn aus Kunststoffschaum erfolgt also insbesondere unter Ausbildung einer geschlossenen Oberfläche. Im Gegensatz zur Herstellung eines Grundkörpers aus EPS, wie bei der eingangs erläuterten DE 4 406 039 C1, sieht die Erfindung keinen EPS-Schaum vor, also kein unter Druck und Hitze zusammengepresstes Kunststoffgranulat, sondern vielmehr einen Grundkörper aus extrudiertem Kunststoffschaum mit geschlossener Oberfläche.

Im Gegensatz zu den bekannten Mehrwegartikeln ist das Mehrweggeschirr nach der Erfindung aufgrund des aus extrudiertem Kunststoffschaum hergestellten Grundkörpers mechanisch belastbarer. Das Kunststoffpolymer des Grundkörpers bildet aufgrund der Herstellungsart eine Wabenstruktur aus, die im Gegensatz zu aus einem Verbund von Kügelchen gebildeten, expandierten Kunststoffen wesentlich stabiler und beständiger ist. Dank des Grundkörpers aus extrudiertem Kunststoffschaum ist das Mehrweggeschirr nach der Erfindung daher besonders langlebig, kann insbesondere häufig gereinigt und mit Lebensmittelprodukten gefüllt werden, ohne brüchig zu werden. Die Extrusion kann insbesondere unter einer Butangas-Atmosphäre erfolgen,

Erfindungsgemäß ist zudem auf zumindest einer Seite des Grundkörpers eine Kunststoffschicht auflaminiert. Diese eine Seite kann im Rahmen des Herstellungsprozesses die Oberseite und/oder die Unterseite der fortlaufenden Bahn aus Kunststoffschaum sein. Die laminierte Kunststoffschicht trägt zur weiteren Beständigkeit des Mehrweggeschirrs bei. So schützt die Kunststoffschicht den Grundkörper aus extrudiertem Kunststoffschaum, zumindest von einer Seite, vor äußeren Einflüssen, insbesondere vor Einflüssen durch in dem Mehrweggeschirr aufgenommenem Produkt. So kann nach einer Ausgestaltung der Grundkörper die auflaminierte Kunststoffschicht auf einer für den Kontakt mit einem durch das Mehrweggeschirr aufzunehmenden Produkt, wie insbesondere einem Lebensmittel, vorgesehenen Seite aufweisen. Die Kunststoffschicht wird dabei insbesondere in flüssigem Zustand aufgetragen. Dank der geschlossenen Oberfläche des extrudierten Kunststoffschaums für den Grundkörper hält die darauf auflaminierte Kunststoffschicht besonders gut an dem Grundkörper, insbesondere ohne eine zusätzliche Haftschicht.

Die auflaminierte Kunststoffschicht schützt das Mehrweggeschirr nicht nur vor einem darin aufgenommenen Lebensmittel. Auch kann eine solche Schicht eine Reinigbarkeit des Mehrweggeschirrs ohne Beschädigung desselben ermöglichen. Nach einer Ausgestaltung ist der Grundkörper hierfür insbesondere beidseitig mit einer solchen auflaminierten Kunststoffschicht versehen. So kann das Mehrweggeschirr von allen Seiten gereinigt werden, insbesondere kann das Mehrweggeschirr so spülmaschinenfest ausgebildet sein. Die Kunststoffschicht kann beispielsweise auf der Oberseite und der Unterseite der fortlaufenden Bahn aus Kunststoffschaum aufgebracht werden, sodass bei einem aus dieser Bahn hergestellten Mehrweggeschirrartikel sowohl auf der Innenseite wie auch auf der Außenseite die auflaminierte Kunststoffschicht vorgesehen ist. All dies trägt zur Wiederverwendbarkeit bei.

Nach einer Ausgestaltung ist das Mehrweggeschirr eine Klappbox, ein Teller, eine Schale oder ein Becher. Wie erwähnt, ist das Mehrweggeschirr insbesondere zur Aufnahme von Lebensmitteln geeignet und vorgesehen. Das Mehrweggeschirr kann entsprechend, insbesondere aufgrund der auflaminierten Kunststoffschicht, flüssigkeitsdicht sein. So sind die erwähnten Mehrwegartikel zur Aufnahme von Lebensmitteln sowie zur Wiederverwendbarkeit geeignet.

Nach einer Ausgestaltung ist der Kunststoffschaum ein Polypropylenschaum, der Grundkörper kann also aus extrudiertem Polypropylen, XPP, gebildet sein. Bei XPP ergeben sich in besonderem Maße die zuvor erläuterten Vorteile, also insbesondere die mechanische Beständigkeit sowie die Temperaturbeständigkeit des Grundkörpers und damit des Mehrweggeschirrs. Somit trägt insbesondere ein Grundkörper aus XPP zur vielfachen Wiederverwendbarkeit des Mehrweggeschirrs bei. Gegenüber anderen Herstellungsarten als der Extrusion sowie hat XPP den Vorteil der Ausbildung einer besonders umfassend geschlossenen Oberfläche und damit insbesondere der erwähnten Beständigkeit. Aber auch gegenüber anderen eventuell extrudierten Kunststoffschäumen weist XPP diesen Vorteil auf. So bildet gerade XPP die bereits angesprochene Wabenstruktur aus. Dabei können sich recht unterschiedliche Zellgrößen ausbilden. Insbesondere gegenüber Polystyrol ergibt sich der Vorteil einer geringeren Brüchigkeit und damit einer besseren Wiederverwendbarkeit.

Nach einer Ausgestaltung ist die mindestens eine Kunststoffschicht eine Polypropylenschicht. Es kann also eine Polypropylenschicht einseitig oder beidseitig auf die fortlaufende Bahn auflaminiert werden. Polypropylen ist besonders beständig.

Nach einer Ausgestaltung ist das Mehrweggeschirr aus einem Flachmaterial tiefgezogen. Bei dem Flachmaterial handelt es sich insbesondere um die ein- oder beidseitig mit der auflaminierten Kunststoffschicht versehene, fortlaufende Bahn aus Kunststoffschaum. Aus dieser Bahn kann durch Tiefziehen und ggf. ein nachfolgendes Ausstanzen das Mehrweggeschirr ausgebildet werden. Diese besonders einfache und effiziente Herstellungsart wird durch den Extrusionsprozess ermöglicht.

Nach einer Ausgestaltung ist die mindestens eine Kunststoffschicht unmittelbar auf den Grundkörper aufgebracht. Die Kunststoffschicht kann also einseitig oder beidseitig in direktem Kontakt mit den Grundkörper auf den Grundkörper auflaminiert werden. Dank der erfindungsgemäßen Extrusion des Grundkörpers aus Kunststoffschaum und der damit erreichten geschlossenen Oberfläche ist ein solches direktes Auflaminieren der Kunststoffschicht möglich, da diese auch ohne eine zusätzliche Haftschicht sicher auf dem Grundkörper hält. Es ist also insbesondere keine Haftschicht zwischen der Kunststoffschicht und dem Grundkörper aufgebracht. Dieses Herstellungsverfahren ist besonders einfach und erlaubt dennoch ein besonders beständiges Mehrweggeschirr. Das Mehrweggeschirr kann somit insbesondere aus nur zwei Bestandteilen aufgebaut sein, nämlich dem Grundkörper aus extrudiertem Kunststoffschaum sowie der ein- oder beidseitig darauf auflaminierten Kunststoffschicht.

Nach einer Ausgestaltung des erfindungsgemäßen Verfahrens erfolgt das Extrudieren und das Auflaminieren inline mit einer einzigen Anlage. Diese Herstellung ist besonders einfach. Aufgrund der Extrusion in einer fortlaufenden Bahn aus Kunststoffschaum ist eine solche Inline-Laminierung möglich. Für das Tiefziehen und ggf. das Ausstanzen kann eine separate Anlage vorgesehen sein. So kann beispielsweise nach dem Extrudieren und Auflaminieren die so erzeugte Bahn aus Kunststoffschaum mit ein- oder beidseitig auflaminierter Kunststoffschicht zunächst auf eine Rolle aufgerollt und anschließend zur Weiterverarbeitung zu einer anderen Anlage verbracht werden.

Eine Ausgestaltung der Erfindung wird im Folgenden anhand von Figuren erläutert. Es zeigen:
- Figur 1: eine schematische Ansicht der Struktur des Mehrweggeschirrs umfassend einen Grundkörper sowie beidseitig auflaminierte Kunststoffschichten,
- Figur 2: ein erfindungsgemäßes Mehrweggeschirr, und
- Figur 3: die Zellstruktur des extrudierten Kunststoffschaums des Mehrweggeschirrs.

Soweit nichts anderes angegeben ist, bezeichnen im Folgenden gleiche Bezugszeichen gleiche Gegenstände.

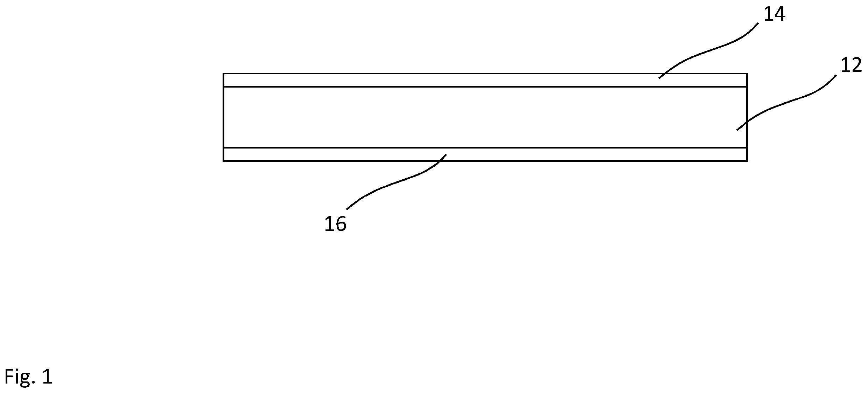

In Figur 1 ist die Schichtstruktur eines erfindungsgemäßen Mehrweggeschirrs aus Kunststoff ersichtlich, umfassend einen Grundkörper 12 aus einem extrudierten Kunststoffschaum und beidseitig auf dem Grundkörper 12 auflaminierte Kunststoffschichten 14, 16. Der Grundkörper besteht hierbei bevorzugt aus Polypropylen, bildet also einen extrudierten Polypropylenschaum, auch XPP genannt. Die Kunststoffschichten 14, 16 bestehen bevorzugt ebenfalls aus Polypropylen. Es kann grundsätzlich auch auf lediglich einer der beiden Seiten des Grundkörpers 12 eine solche auflaminierte Kunststoffschicht vorgesehen sein.

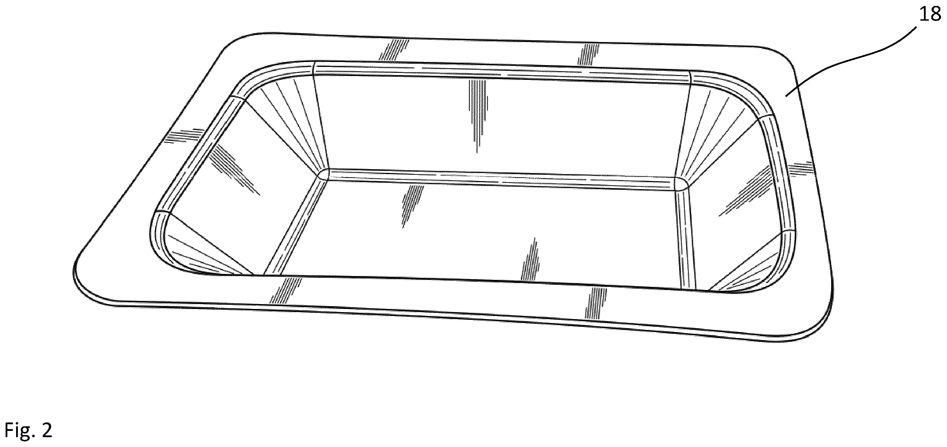

Figur 2 zeigt ein erfindungsgemäßes Mehrweggeschirr 18 mit einer wie soeben zur Figur 1 erläuterten Schichtstruktur. Bei dem Mehrweggeschirrartikel aus Figur 2 handelt es sich um eine Schale zur Aufnahme von Lebensmitteln. Der Mehrweggeschirrartikel 18 wird hergestellt, indem zunächst eine fortlaufende Bahn aus Polypropylenschaum und ggf. Butangas mittels eines Schaumextruders extrudiert wird. Anschließend wird, bevorzugt inline, auf die Oberseite und die Unterseite der Bahn eine Polypropylenschicht auflaminiert, also insbesondere im flüssigen Zustand aufgebracht. Es entsteht so eine beidseitig mit der auflaminierten Polypropylenschicht versehene XPP-Bahn. Aus dieser Bahn wird dann wiederum durch Tiefziehen und Ausstanzen der Mehrweggeschirrartikel geformt.

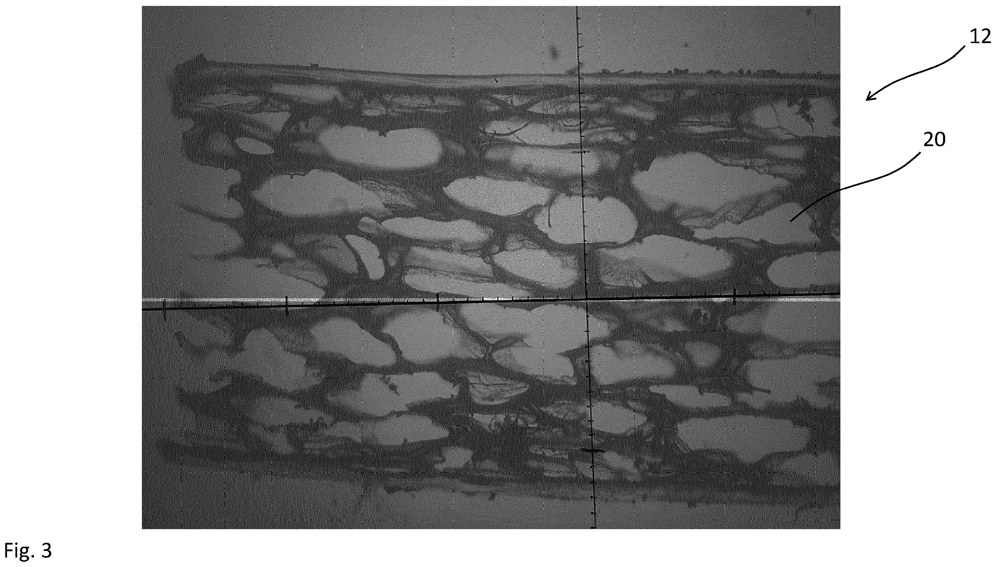

Der Grundkörper aus XPP bildet dabei eine in Figur 3 ersichtliche Wabenstruktur 20 aus. Eine solche Struktur trägt zur Stabilität, insbesondere zur mechanischen Beständigkeit und Temperaturbeständigkeit, des Grundkörpers und damit des Mehrweggeschirrs bei. Dies ist ein großer Fortschritt gegenüber expandierten Kunststoffschäumen, insbesondere gegenüber EPS, bei denen Kunststoffgranulat unter Druck und Hitze zusammengepresst wird. So weist der erfindungsgemäße Grundkörper aus XPP eine geschlossene Oberfläche auf, wie ebenfalls in Figur 3 gut zu erkennen. Dies kann ein Grundkörper aus EPS nicht gewährleisten kann. Durch die somit erreichten, verbesserten Materialeigenschaften wird der Mehrweggeschirrartikel besonders häufig wiederverwendbar und insbesondere auch bei hohen Temperaturen reinigbar.

Die insbesondere beidseitig auf den Grundkörper auflaminierte Kunststoffschicht schützt dabei den Grundkörper insbesondere vor Flüssigkeiten, wie eingebrachten Lebensmitteln bzw. Reinigungsflüssigkeiten. Somit wird, insbesondere bei beidseitiger Laminierung, die Reinigbarkeit, bspw. in einer Spülmaschine, ermöglicht, was weiter zur Wiederverwendbarkeit beiträgt. Dank der geschlossenen Oberfläche kann die Kunststoffschicht gut an dem Grundkörper haften, insbesondere ohne dass eine zusätzliche Haftschicht notwendig wäre.

## Patentansprüche

1. Verfahren zum Herstellen von Mehrweggeschirr, mit den folgenden Schritten:
• Extrudieren einer fortlaufenden Bahn aus Polypropylen-Kunststoffschaum unter Ausbildung einer geschlossenen Oberfläche des Kunststoffschaums mittels eines Schaumextruders,
• anschließendes Auflaminieren in flüssigem Zustand einer Polypropylen-Kunststoffschicht unmittelbar auf die Oberseite und die Unterseite der Bahn,
• Formen des Mehrweggeschirrartikels durch Tiefziehen und nachfolgendes Ausstanzen des Mehrweggeschirrartikels aus der beidseitig mit der auflaminierten Polypropylen-Kunststoffschicht versehenen Bahn.

2. Verfahren nach Anspruch 1, bei dem das Extrudieren und das Auflaminieren inline mit einer einzigen Anlage erfolgt.

3. Verfahren nach einem der vorhergehenden Ansprüche, bei dem das Mehrweggeschirr eine Klappbox, ein Teller, eine Schale oder ein Becher ist.

## Claims

1. A method for production of reusable dishware, comprising the following steps:
• extruding a continuous sheet of polypropylene plastic foam under formation of a closed surface of the plastic foam by means of a foam extruder,
• subsequently laminating a polypropylene plastic layer in a liquid state directly onto the upper side and the lower side of the sheet,
• forming the reusable dishware article by deep drawing and subsequently punching out the reusable dishware article from the sheet provided on both sides with the laminated polypropylene plastic layer.

2. Method according to claim 1, wherein the extruding and laminating are carried out in-line with a single plant.

3. Method according to any one of the preceding claims, wherein the reusable dishware is a hinged box, a plate, a bowl or a cup.

## Revendications

1. Procédé de fabrication de vaisselle réutilisable, comprenant les étapes suivantes :
• extrusion d'une bande continue en mousse de matière plastique à base de polypropylène, par formation d'une surface fermée de la mousse de matière plastique au moyen d'un extrudeur de mousse,
• stratification subséquente à l'état liquide d'une couche de matière plastique à base de polypropylène directement sur le côté supérieur ou le côté inférieur de la bande,
• formation de l'article de vaisselle réutilisable par emboutissage profond, suivie d'un découpage de l'article de vaisselle réutilisable à partir de la bande pourvue de la couche de matière plastique à base de polypropylène stratifiée sur les deux côtés.

2. Procédé selon la revendication 1, dans lequel l'extrusion et la stratification sont effectuées en ligne à l'aide d'une seule installation.

3. Procédé selon l'une des revendications précédentes, dans lequel la vaisselle réutilisable est une boîte à rabat, une assiette, un bol ou un gobelet.
